## Europäisches Patentamt
## European Patent Office
## Office européen des brevets

(19)

(11) Veröffentlichungsnummer: **0 092 070**
**A2**

(12) # EUROPÄISCHE PATENTANMELDUNG

(21) Anmeldenummer: 83103052.3

(51) Int. Cl.³: **C 08 F 210/02**

(22) Anmeldetag: 28.03.83

(30) Priorität: 06.04.82 DE 3212748

(43) Veröffentlichungstag der Anmeldung: 26.10.83
Patentblatt 83/43

(84) Benannte Vertragsstaaten: AT BE DE FR GB

(71) Anmelder: BASF Aktiengesellschaft,
Carl-Bosch-Strasse 38, D-6700 Ludwigshafen (DE)

(72) Erfinder: Ziegler, Walter, Dr., Starenweg 15,
D-6803 Edingen-Neckarhausen (DE)
Erfinder: Brandstetter, Franz, Dr., Ritterbueschel 45,
D-6730 Neustadt (DE)

(54) Copolymerisate des Ethylens mit 3-Methyl-buten-3-ol-1.

(57) Die Erfindung betrifft Ethylencopolymerisate, die
a) 90–99,5 Gewichtsteile Ethylen,
b) 0,5–10 Gewichtsteile 3-Methyl-buten-3-ol-1 und
c) 0–50 Gewichtsteile mindestens eines anderen mit
   Ethylen copolymerisierbaren Monomeren
einpolymerisiert enthalten.

EP 0 092 070 A2

Copolymerisate des Ethylens mit 3-Methyl-buten-3-ol-1

Copolymerisate des Ethylens mit Hydroxylgruppen enthaltenden Monomeren sind beispielsweise aus der DE-PS 1 769 403 und der US-PS 3 201 374 bekannt. In der ersten Druckschrift werden Copolymerisate beschrieben, die eine tertiäre Hydroxygruppe enthalten und die weiteren chemischen Reaktionen nur schwer zugänglich sind. Gemäß der US-Patentschrift wird die Hydroxylgruppe im Copolymerisat über einen Ester der Acrylsäure in das Polymerisat eingebracht, was zu einer Säure- und Alkalilabilität führt.

Der Erfindung lag die Aufgabe zugrunde, säure- und alkalistabile Ethylencopolymerisate mit Hydroxylgruppen zu schaffen, die leicht weiteren chemischen Reaktionen zugänglich sind.

Diese Aufgabe wird erfindungsgemäß gelöst durch Ethylencopolymerisate, die 40 bis 99,5 Gew.-Teile Ethylen, 0,5 bis 10 Gew.-Teile 3-Methyl-buten-3-ol-1 und 0 bis 50 Gew.-Teile mindestens eines anderen mit Ethylen copolymerisierbaren Monomeren einpolymerisiert enthalten.

Die Herstellung der Ethylencopolymerisate kann nach herkömmlichen üblichen Hochdruckpolymerisationsverfahren erfolgen (vgl. Ullmanns Encyklopädie der technischen Chemie, 4. Auflage, Band 19, [1980], Seiten 169 bis 175, Verlag Chemie GmbH, D-6940 Weinheim). Die Copolymerisation des Ethylens mit dem 3-Methyl-buten-3-ol-1, gegebenenfalls zusammen mit anderen mit Ethylen copolymerisierbaren Monomeren, erfolgt bei Drücken von 350 bis 5000 bar, vorzugsweise 1500 bis 3000 bar. Die Temperaturen im Polymerisationssystem liegen zwischen 50 und 450$^\circ$C, vorzugsweise zwischen 150 und 350$^\circ$C. Die Bedingungen im Polyrisationssystem lassen sich apparativ in sogenannten

Fre/P Rohrreaktoren oder Autoklaven einstellen. Unter Rohrreaktoren versteht man rohrförmige Polymerisationsgefäße,
deren Längenausdehnung das über 2000-fache, bevorzugt
5000 bis 50 000-fache des Rohrdurchmessers beträgt. Wie
üblich, wird ein Teil der Polymerisationswärme durch
Kühlung des Rohrreaktors mit Wasser von außen abgeführt.
Autoklaven sind Druckgefäße mit einem Längen/Durchmesser-
-Verhältnis von 5 bis ca. 20.

Die Copolymerisation des Ethylens mit dem 3-Methyl-buten-
-3-ol-1, gegebenenfalls mit anderen mit Ethylen copolymerisierbaren Monomeren, erfolgt in Gegenwart radikalischer
Initiatoren. Unter radikalischen Polymerisationsinitiatoren sollen diejenigen Katalysatoren verstanden werden,
die auch für die Homopolymerisation des Ethylens unter
hohem Druck verwendet werden. Geeignet ist beispielsweise
Sauerstoff, zweckmäßigerweise in Mengen von 10 bis
200 mol-ppm, bezogen auf das zu polymerisierende Ethylen.
In Betracht kommen außerdem Peroxide und andere radikalbildende Verbindungen sowie Gemische von Peroxiden, die
unterschiedliche Zerfallstemperaturen haben und Hydroperoxide sowie Mischungen aus Sauerstoff und Peroxiden
und/oder Hydroperoxiden. Als Beispiele für Peroxide und
Hydroperoxide seien genannt: tert.-Butylperpivalat,
Di-tert.-butylperoxid, tert.-Butylhydroperoxid, tert.-
-Butylperbenzoat und Dilauroylperoxid. Unter radikalischen Polymerisationsinitiatoren sollen auch Verbindungen
wie beispielsweise Azo-iso-buttersäuredinitril verstanden
werden. Man kann auch Mischungen aus Sauerstoff und einem
oder mehreren Peroxiden verwenden.

Das Molekulargewicht des anfallenden Copolymerisats kann
durch die üblichen Regler, z.B. Kohlenwasserstoffe wie
Propan, Propen etc., Ketone wie Aceton, Methylethylketon

etc. oder Aldehyde wie Propionaldehyd, auf den gewünschten Wert gebracht werden.

Die Copolymerisation wird im allgemeinen in Abwesenheit eines Lösungsmittels durchgeführt. Die geringen Mengen eines inerten Lösungsmittel, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Die Komponente (b) ist an sich bekannt und in der Literaturstelle DE-PS 1 275 049 beschrieben.

Als Komponente (c) kommen alle mit Ethylen copolymerisierbaren Monomere, insbesondere solche, die monoethylenisch ungesättigt sind, in Frage. Geeignet sind z.B. Vinylcarbonsäureester, insbesondere Vinylester von $C_1$- bis $C_6$--Alkancarbonsäuren; Acrylsäureester, insbesondere Ester der Acryl- und Methacrylsäure mit $C_1$- bis $C_8$-Alkanolen, Ester monoethylenisch ungesättigter Dicarbonsäuren, insbesondere Mono- und Diester der Malein- und Fumarsäure; monoethylenisch ungesättigte Carbonsäuren, insbesondere Acryl-, Methacryl-, Malein- und Fumarsäure; Amide monoethylenisch ungesättigter Carbonsäuren, insbesondere Acryl- und Methacrylsäureamid sowie N-Mono- und N,N-Dialkylamide der Acryl- und Methacrylsäure; Vinylether; monoethylenisch ungesättigte Alkohole; monoethylenisch ungesättigte Ketone.

Die erfindungsgemäßen Ethylencopolymerisate weisen bevorzugt Dichten von 0,910 bis 0,965 g/cm$^3$, gemessen nach DIN 53 479, und Schmelzindices größer als 0,1 g/10 min., gemessen nach DIN 53 735 bei 190°C und 2,16 kp, auf.

Die Polymerisation des Ethylens mit dem 3-Methyl-buten-3--ol-1 wurde in allen Versuchen in einem rohrförmigen Reaktor mit einem Längen-/Durchmesserverhältnis von etwa 14 000 durchgeführt. Zur Abführung der Polymerisationswärme wurden die Rohrwände von außen mit Wasser gekühlt.

## Beispiel 1

Der Reaktor wurde auf der Eingangsseite kontinuierlich mit einem auf 2 600 bar komprimierten Gemisch, bestehend aus 1 400 kg/Std. Ethylen, 0,42 l/Std. Propionaldehyd und 10,6 l/Std. 3-Methyl-buten-3-ol-1 beschickt. Durch die Zugabe von 1,63 Molppm/Std. Di-tert.-butylperoxid in Form einer Kohlenwasserstofflösung nach 3/10 Reaktorlänge erreichte das Reaktionsgemisch eine Maximaltemperatur von 250°C. Es fielen 168 kg/Std. an Ethylencopolymerisat mit einem Gehalt an 3-Methyl-buten-3-ol-1 von 1,6 Gew.% und mit einem Schmelzindex von 3,8 g/10 min (gemessen nach DIN 53 735 bei 190°C und 2,16 kp) an.

## Beispiel 2

Die Verfahrensweise war wie in Beispiel 1 beschrieben, mit der Änderung, daß kein Propionaldehyd, 3,5 Molppm/Std. Di-tert.-butylperoxid und 30 l/Std. 3-Methyl-buten-3-ol-1 verwendet wurden. Es wurden 170 kg/Std. an Ethylencopolymerisat erhalten, mit einem Gehalt von 3,8 Gew.% 3-Methyl-buten-3-ol-1 und einem Schmelzindex von 90 g/10 min (gemessen nach DIN 53 735 bei 190°C und 2,16 kp).

Die Bestimmung des Anteils an 3-Methyl-buten-3-ol-1 erfolgte über den Sauerstoffgehalt des Copolymerisats.

0092070

<u>Patentanspruch</u>

Ethylencopolymerisate, die

a)  40 - 99,5 Gewichtsteile Ethylen,

b)  0,5 - 10 Gewichtsteile 3-Methyl-buten-3-ol-1 und

c)  0 - 50 Gewichtsteile mindestens eines anderen mit Ethylen copolymerisierbaren Monomeren

einpolymerisiert enthalten.